# EUROPEAN PATENT APPLICATION

(11) **EP 1 626 219 A2**
(43) Date of publication of application: **15.02.2006**
(21) Application number: 05250726.6
(22) Date of filing: 09.02.2005
(51) Int. Cl.: F16L 47/28, F16L 5/08, F16J 15/46, B29C 33/48

(54) **Seal devices and sealing methods**

(30) Priority: 29.06.2004 GB 0414456
(71) Applicant: Advanced Composites Group Ltd., Heanor, Derbyshire DE75 7SP (GB)
(72) Inventor: Gharvam Shahidi, Ebrahim Advance Composites Group, Ind. Estate Heanor, Derbyshire DE75 7SP (GB); Fontana, Quentin Advance Composites Group Ltd., Ind. Estate Heanor, Derbyshire DE75 7SP (GB)
(74) Representative: Womsley, Nicholas

(57) **Abstract**

A device (10), and also a method, for sealing around an inflatable member (I) at the location of exit (E) of the inflatable member (I) from a body (B), the device (10) being locatable on a body (B) at a position to form a seal around, and to restrain inflation of, the inflatable member (I) at said location of exit (E) thereof from the body (B).

## Description

The present invention relates to seal devices and sealing methods and particularly, but not exclusively, seal devices and sealing methods for providing a seal on collapsible mould tools.

Moulded articles, such as moulded fibre-reinforced composite articles are generally formed on, in or around mould tools. Materials, such as resin impregnated fibrous material, resin, fibres, prepregs etc. are generally "laid up" on the mould. Particularly where a plurality of layers of material are to be processed on a mould tool to form an article, non-ambient pressure conditions such as vacuum conditions are often applied to the material on the mould, either in autoclave or non-autoclave conditions, to facilitate consolidation of the material, cure or partial cure and removal of air entrapped between the layers.

To mould certain articles the mould tool must be collapsible. This is particularly so when the geometry of the tool and the article being moulded are such that simple removal of the article from the mould upon completion of the moulding process, is not possible. Collapsible tools generally comprise a plurality of parts selectively movable relative to one another to allow an article moulded thereon to be removed. Often such tools can be disassembled at least partially. Alternatively the tool may remain generally as a unit, with the parts selectively movable between a collapsed configuration to a configuration for moulding.

It is important when collapsible mould tools are used and non-ambient pressure conditions such as vacuum conditions are required for processing, that effective seals are provided between the relevant parts of the collapsible tool to ensure that the desired pressure conditions can be achieved and satisfactorily maintained.

One method of sealing collapsible mould tools is to use pressurisable seals. These seals are generally held in one or more channels in mating surfaces of the tool. The profile of the channels is such that they are often narrower along the side that opens onto the mating surface, than in the main body of the channel, such that the seal locates therein, but when pressured can inflate to extend to and where appropriate from the said open side to seal against a face of an adjacent part. For example, the channel could be in the form of a key-way groove.

With all relevant seals in their respective channels the tool can be assembled. Once assembled the seals, which are known in the form of silicone rubber tubes, are pressurised and thereby inflated within the channel to extend through said open side to produce a seal between the two mated surfaces. Inflation of the seals within the groove helps secure the seal in position.

A significant disadvantage of such arrangements is that where such pressurised seals exit the mould tool through an end of a channel it is very difficult to provide a good, reliable seal to enable vacuum conditions to be applied therearound to process an article on the mould tool.

According to the present invention there is provided a device for sealing around an inflatable member at the location of exit of the inflatable member from a body, the device being mountable on a body at a position to form a seal around, and to restrain inflation of, the inflatable member at said location.

Preferably the device comprises a main body defining an opening there through along which the inflatable member is located when the device is in position on a body, for use. The opening is preferably of a size to receive the inflatable member, to be a snug or reasonably tight fit within the opening when in a non-inflated condition, so that the opening acts to restrain the inflatable member against inflation therein.

Preferably the opening extends through the device from a surface thereof which is substantially at the location of exit of the inflatable member from the body, when the device is in use, to a position preferably remote from said location. The opening is preferably in the form of a passage.

Seal means is preferably provided on said surface, desirably around the opening, to provide or contribute to said seal. The seal means may be an integral part of the sealing device or it may be applied to the device and/or around the inflatable tube at the location of exit thereof from a body, prior to or during location of the device for use. The seal means may comprise a deformable seal compound or body, and may comprise sealant tape. Preferably the seal means is selectively releasable from a body following use.

A recess may be provided on the device in which the seal means is located in use. The recess preferably extends around the opening.

One or more further recesses may be provided for the location of further seal means. Some or all of said recesses may be interconnected.

Preferably the opening is in the form of an elongate passage which may extend generally perpendicularly from the general plane of said surface to said remote position. The passage may be defined in part in a tubular formation of the device, which tubular formation may be so shaped to receive restraining means to restrain undesired inflation of the inflatable member as it exits the device. The tubular formation is preferably shaped to receive restraining means in the form of a sleeve, coil, tube or other conventional non-dilating arrangement desirably thereover. The tubular formation may taper along at least a portion of its length in a direction generally towards the free end thereof.

Preferably the device comprises a base plate attachable to a body for location of the device. A rear surface of the base plate may comprise said surface. Preferably the opening extends through the base plate. Preferably the tubular formation extends from one side of said base plate, preferably to be generally perpendicular thereto.

Preferably the device comprises means to enable attachment thereof to a body. The means may comprise one or more apertures or formations to receive fixing means, such as threaded fasteners, screws, bolts or the like. Preferably the device is releasably attachable to a body. Preferable means is provided on a body to receive said fixing means, such as internal thread formations.

Preferably the means to enable attachment are positioned so that they do not obstruct or otherwise adversely affect the ability of a seal to be made over or beneath the device to form vacuum conditions.

Preferably the device is for sealing around a pressurisable seal located for use between a plurality of mating surfaces of a collapsible mould tool.

There is also provided in accordance with the present invention, a method of sealing around an inflatable member at the location of exit of the inflatable member from a body, the method comprising forming a seal around and restraining inflation of the inflatable member at said location.

Preferably the method comprises locating the inflatable member, generally at said location, within a device. Preferably the member is located to be a snug or reasonably tight fit when in a non-inflated condition within the device, and desirably within a passage in the device, so that the passage acts to restrain the inflatable member against inflation therein. A seal may be formed between the body, device and inflatable member when the member is inflated with the device in position therearound on the body.

Preferably the method comprises restraining the inflatable member against inflation at and from the location of exit of the inflatable member from a body to a position remote from said location. Preferably the inflatable member is located along an elongate passage in the device. The passage may be located at least in part in a tubular formation of the device as described above.

Preferably the method comprises providing seal means around the inflatable member generally where the inflatable member enters the device generally at the said location of exit. The seal means may be applied prior to or during location of the device for use. The seal means may be provided in the form of a deformable seal compound or body, and may comprise sealant tape. The seal means is preferably selectively removable following use.

The seal means may be located, at least in part, within a recess.

The method may comprise providing further seal means between the device and the body against which it seals, and one or more recesses may be provided to facilitate the formation of such further seals.

Preferably the device is secured in position over the inflatable member for use. The device is preferably secured to the body, desirably using securing means such as threaded fasteners, to releaseably secure the device. Preferably the device is securely attached as described above.

The method preferably involves the use of a device substantially as described above.

The invention further provides a body, such as a collapsible mould tool or a part thereof, having one or more devices as hereinbefore described.

An embodiment of the present invention will now be described by way of example only, with reference to the accompanying drawings, in which:-
Fig. 1 is a diagrammatic exploded cross-sectional view of a collapsible mould tool;
Fig. 2 is an enlargement of the detail of the area II of Fig. 1, with an inflatable seal in location;
Fig. 3 is a front view of a device according to the present invention;
Fig. 4 is a side view of the device in the direction of arrow IV of Fig. 3;
Fig. 5 is a view of the device of Fig. 3 in the direction of arrow V;
Fig. 6 is a rear view of the device of Fig. 3;
Fig. 7 is a perspective view of the device of Fig. 3 in position for use on a collapsible mould tool; and
Fig. 8 is an enlarged cross-sectional view of the device of Fig. 7, in position on the mould tool, generally in the direction VIII-VIII of Fig. 7.

Referring to the drawings there is provided a device 10, and also a method, for sealing around an inflatable member I at the location of exit E of the inflatable member I from a body B, the device 10 being locatable on a body B at a position to form a seal around, and to restrain inflation of, the inflatable member I at said location of exit E thereof from the body B.

The device 10 and the method of the present invention have been found particularly useful to provide seals around pressurisable seal members used to form seals within collapsible mould tools, at the location where such members exit the mould tool. However, it will be appreciated that the invention can also be used for other applications where seals are required or desirable around other inflatable members as they exit other bodies.

Mould tools are used in the formation of moulded articles such as fibre-reinforced composite articles. Materials for such articles, such as resinous materials, fibrous materials, resin-impregnated fibrous materials, prepregs etc. are laid in, on or around the mould surface(s) of the mould tool, and then subjected to appropriate conditions to cure, part-cure or otherwise process the material to form an article. In the production of fibre-reinforced composite articles, particularly where a plurality of layers of material are on the mould, it is often at least desirable, if not necessary, to apply non-ambient pressure conditions, for example vacuum conditions, to the material during processing. Such conditions can for example, help to mitigate the formation of unwanted voids within the structure of a moulded article. Applying conditions of vacuum or reduced pressure around an article during processing, helps to draw any entrapped air from within the structure, generally between respective layers, as the material cures.

To mould certain articles a mould tool must be collapsible. This is particularly important when the geometry of the tool and the article being moulded are such that simple removal of the article from the mould upon completion of the moulding process, is inconvenient, difficult or even impossible. Collapsible moulds essentially comprise a plurality of discrete parts which can be selectively moved from a configuration in which they are in position to define a mould surface to a collapsed condition in which one or more of the parts is away from position to enable an article formed thereon to be removed from the mould tool.

With such mould tools, it is important that when the respective parts are together to form the mould surface an effective seal is formed between those parts to enable desirable pressure conditions to be applied to the tool and the material being processed thereon. In other words, the use of a collapsible tool, for autoclave and out-of-autoclave processing of composite materials, often requires that the tool be "vacuum integral", at least in the region where non-ambient pressure conditions are required.

A known type of seal for use in sealing between parts of a collapsible mould tool is a pressurisable seal, which comprises an inflatable elongate seal member located along a groove or channel formed in one of two mating surfaces of respective parts of a collapsible tool. Such pressurisable seals often comprise inflatable silicone rubber tubes, connectable to a pressure supply for selective pressurisation/depressurisation and therefore inflation/deflation thereof. Inflation of a tube within the groove, causes the tube to press against the adjacent mating surface, to provide the requisite seal.

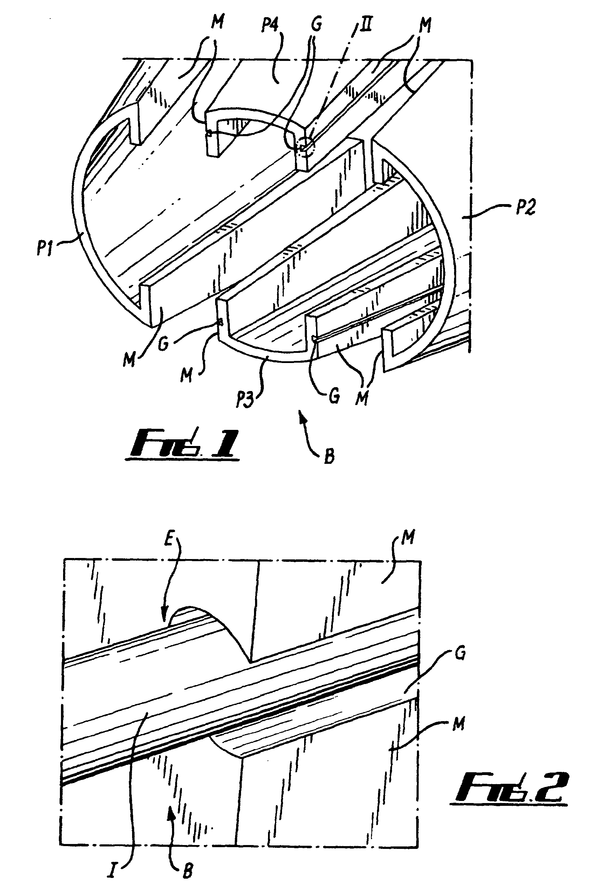

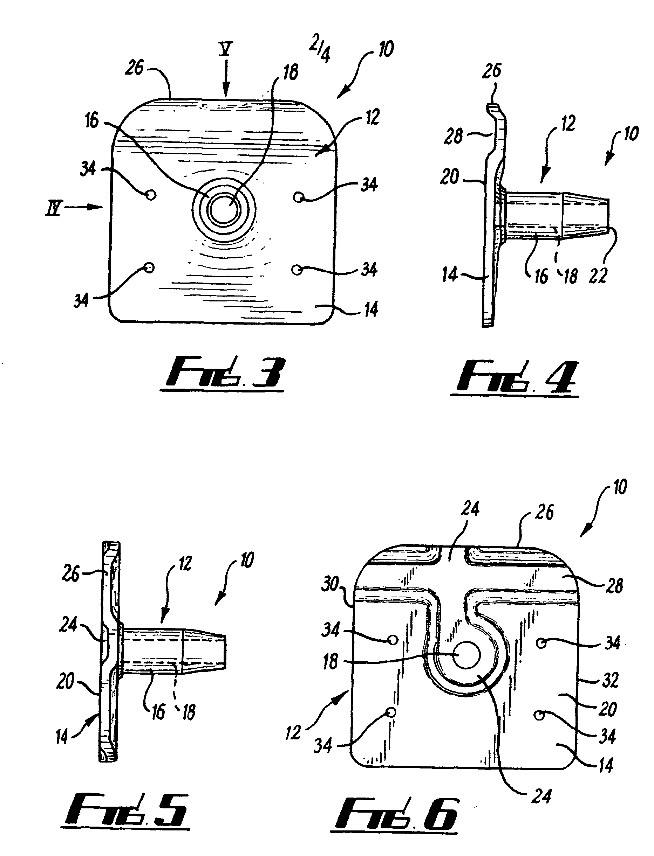

Fig. 1 is an exploded view of a collapsible mould tool comprising four component parts P1, P2, P3, P4, and an arrangement of grooves G which in use locate pressurisable seals arranged to enable the formation of seals between the respective mating surfaces M. In Fig. 1, each groove G is illustrated without a pressurisable seal I located therein. Fig. 2, shows the detail of the section II of Fig. 1 with a pressurisable seal I extending along a groove G and exiting therefrom.

Such seal arrangements provide effective sealing between the component parts of a collapsible mould tool. However, difficulties arise in maintaining the vacuum integrity of the mould at the locations where the pressurisable seals exit the mould tool. At these locations, it can be very important that a seal is provided which maintains the vacuum integrity of the mould tool, otherwise satisfactory processing and formation of an article using the mould tool may be compromised or prevented.

The device 10 and the methodology of the present invention provide an effective seal at such locations of exit.

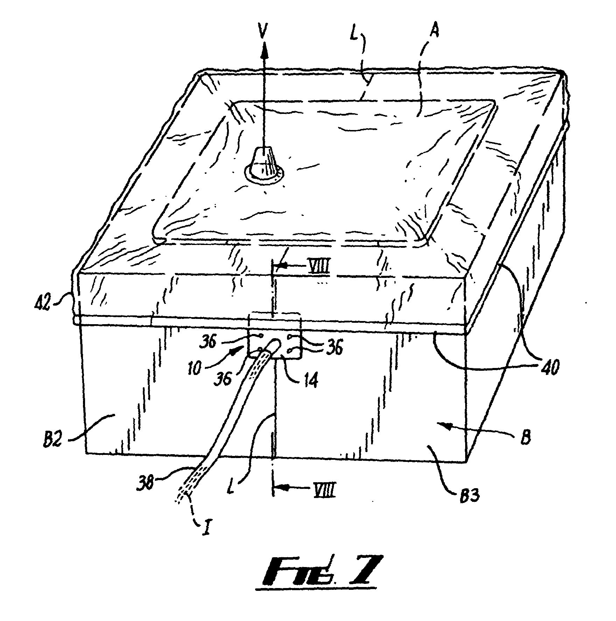

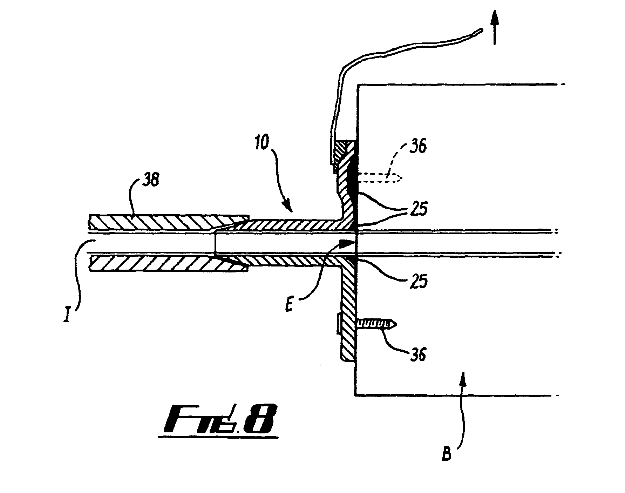

In more detail, with particular reference to Figs. 3 to 6, the device 10 comprises a main body 12 having a base plate 14 from which extends a generally tubular formation 16. The main body may be comprised of a fibre-reinforced resinous material. It has been found particularly advantageous if the material of the device is the same or substantially the same as the material of the mould tool, to avoid any difficulties arising due to differences in physical properties, such as thermal expansion, during use.

A passage 18 extends through the main body 12 of the device 10 in a direction substantially perpendicular to the general plain of the base plate 14, and substantially centrally through the tubular formation 16 to open on both a rear surface 20 of the base plate 14 and the free end 22 of the tubular formation 16. The external profile of the tubular formation 16 may be tapered in the direction away from the base plate 14.

A recess 24 (see figs. 5 and 6) is provided around the opening of the passage 18 on the rear surface 20, to provide for the location of seal means 25 in the form of a deformable seal, illustrated in use as the darkened area in Fig. 8 for clarity. The seal means 25 may comprise any suitable deformable seal compound or body, such as "sealant tape".

The recess 24 also extends away from around the opening of the passage 18 to open on one side 26 of the device 10.

A further recess 28 is provided in the rear surface 20 of the base plate 14 which extends generally parallel to the side 26 between two opposing sides 30, 32 of the device 10 to intersect with the recess 24 in the section thereof extending from around the opening to the passage 18 to the side 26. The recess 28 provides for the location of further seal means therein to provide for further sealing as will be explained.

Apertures 34 are provided through the base plate 14 to receive fastening means therethrough to fasten the device 10 to a mould tool. Four apertures are shown although it will be appreciated that any suitable number may be employed. Suitable fastening means 36 may comprise threaded fasteners, such as suitable bolts, or other, preferably releasable fastening means. Appropriate fastener receiving formations (not shown), such as internal threads are provided to enable attachment of the device 10 to the mould tool.

In use, the device 10 is mounted to a body B, such as a mould tool, over the location of exit of an inflatable member I, such as a pressurisable seal, from the body B. To mount the device 10 for use, the device 10 is located around the pressurisable seal I, when in the non-inflated state, with the seal I extending along the passage 18 and passed therealong to abut the mould tool B. The seal means 25 may be provided in the recesses 24, 28 as an integral part of the device 10, or it may be applied prior to or during location of the device 10 for use. Indeed, the seal compound 25 may be applied to the relevant area of the mould tool, around the location of exit of the pressurisable seal exiting from the mould tool, prior to location of the device 10 against the mould tool B.

The device 10 is then secured in location on the collapsible mould tool B, using fastening means 36 which pass through the apertures 34 to secure in the receiving formations, such as internal thread formations, to tightly secure the device 10 in position. As the device 10 is tightened in position using the fastening means 36, the seal means 25 is compressed and deformed to form a seal around the point of exit E of the pressurisable seal I as it exits the body B.

The internal dimension of the passage 18 is such that it receives the pressurisable seal I as a reasonably snug fit (see Fig. 8) whilst of course allowing for movement of the device 10 on and off the seal, when the seal is in a non-pressurised, non-inflated condition. However, when the pressurisable seal is pressurised during use to form a seal within the moulded tool, the passage 18 acts to restrain inflation of the section of the pressurisable seal located therein, whereby to prevent distortion and compromise of the seal provided around the pressurisable seal I as it exits the body.

Further inflation restraining means 38, such as a non-dilating tube or coil 38 may be provided over some or all of the remainder of the pressurisable seal I outside of the body B. This further means 38 may be locatable over the tubular formation 16 (Fig. 8), and in particular the tapered section of the remote end 22 to provide further control of undesirable inflation of the pressurisable seal, outside of the body B.

Referring to Figs. 7 and 8, a device 10 according to the present invention is shown in position, for use, on a collapsible mould tool B comprising a first part B2 and a second part B3. The two parts B2, B3 have respective mating surfaces which mate together along the joint line L. A pressurisable seal I is provided along a groove in one of the mating surfaces, generally in accordance with the configuration shown in Fig. 1 to provide a seal against the other mating surface when pressurised. The device 10 is secured to the body B, around the pressurisable seal I outside the mould tool B, to lie over the joint line L of the mating surfaces. The device 10 is located and secured in position as described above.

A band of sealant tape 40 is provided all the way around the body B to sealingly locate a vacuum bag 42 over the top of the mould tool B, and over a layer of material A to be moulded. The sealant tape 40 sealingly extends over the base plate 14 of the device 10. The locations of the fastening means 36 are such that they do not interfere with this seal.

The configuration of the recesses 24, 28 and the provision of the sealing means 25 therein are also such that the integrity of the vacuum applied within the vacuum bag 42 is maintained for use.

During moulding, the inflatable, pressurisable seal I is pressurised, providing the necessary seal between the two mating surfaces of the parts B2 and B3. The device 10 provides a seal around the location of exit of the pressurised seal I from the body B. The device 10 ensures the integrity of the seal at the point of exit by restraining inflation of the pressurisable seal and that point. An effective, air tight seal is thereby provided not only between the parts B2, B3 of the body B but also at the point of exit of the pressurisable seal I from the body B.

During processing the material A and mould tool B are subjected to conditions to process the material of the article A, and the present invention has particular application where non-ambient pressure conditions are applied. In this specific illustration, air is drawn from beneath the vacuum bag 42 through the outlet V to reduce the pressure beneath the bag to effectively provide vacuum conditions and draw air from within the material A and thus mitigate the formation of voids within the processed article.

It will be appreciated that the article moulded from the material A in Fig. 8 is shown in a very simplistic form, to illustrate the present invention. The use of collapsible mould tools is generally more applicable to the formation of articles whose geometry and the geometry of the mould tool are such that removal of the article from the tool would be difficult, if not impossible, if the mould tool were not collapsible.

One particular application where collapsible mould tools are useful, and where the present invention will have particular use, is in fibre placement. In such applications, the collapsible mould provides a central mould tool or mandrel around which windings of fibre are made. The fibre windings may be preimpregnated with resin or resin may be applied thereto. Curing thereof under predetermined pressure conditions is carried out on the central mould tool.

To facilitate removal of these windings following processing, the ability of the mandrel to be collapsed is often necessary.

Various embodiments may be made without departing from the spirit or scope of the present invention. For example, the device may comprise formations to receive a plurality of pressurisable seals, and any appropriate configuration of recesses to receive seal means in the rear surface 20 of the device may be provided.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A device for sealing around an inflatable member at the location of exit of the inflatable member from a body, the device (10) being mountable on a body (B) at a position to form a seal around, and to restrain inflation of, the inflatable member (I) at said location (E).

2. A device as claimed in claim 1, **characterised in that** the device comprises a main body (12) defining an opening (18) there through along which the inflatable member (I) is located when the device (10) is in position on a body (B), for use.

3. A device as claimed in claim 2, **characterised in that** the opening (18) is of a size to receive the inflatable member (I), to be a snug or reasonably tight fit within the opening (18) when in a non-inflated condition, so that the opening (18) acts to restrain the inflatable member (I) against inflation therein.

4. A device as claimed in claim 2 or 3, **characterised in that** the opening (18) extends through the device (10) from a surface (20) thereof which is substantially at the location (E) of exit of the inflatable member (I) from the body (B), when the device (10) is in use, to a position remote from said location.

5. A device as claimed in any of claims 2 to 4, **characterised in that** the opening (18) is in the form of a passage.

6. A device as claimed in claim 4 or 5, **characterised in that** seal means (25) is provided on said surface (20) to provide or contribute to said seal.

7. A device as claimed in claim 6, **characterised in that** seal means (25) is provided around the opening.

8. A device as claimed in claim 6 or 7, **characterised in that** the seal means (25) is an integral part of the sealing device (10).

9. A device as claimed in claim 6 or claim 7, **characterised in that** the seal means (25) is applied to the device (10) and/or around the inflatable member (I) at the location (E) of exit thereof from a body (B), prior to or during location of the device (10) for use.

10. A device as claimed in any of claims 6 to 9, **characterised in that** the seal means (25) comprises a deformable seal compound or body.

11. A device as claimed in any of claims 6 to 10, **characterised in that** the seal means (25) comprises sealant tape.

12. A device as claimed in any of claims 6 to 11, **characterised in that** the seal means (25) is selectively releasable from a body following use.

13. A device as claimed in any of claims 6 to 12, **characterised in that** a recess (24) is provided on the device (10) in which the seal means (25) is located in use.

14. A device as claimed in claim 13, **characterised in that** the recess (24) extends around the opening.

15. A device as claimed in any preceding claim, **characterised in that** one or more further recesses (28) is provided for the location of further seal means (25).

16. A device as claimed in claim 15, **characterised in that** some or all of said recesses (25,28) are interconnected.

17. A device as claimed in any of claims 2 to 16, **characterised in that** the opening is in the form of an elongate passage (18).

18. A device as claimed in claim 17, **characterised in that** the passage (18) extends generally perpendicularly from the general plane of said surface (20) to said remote position.

19. A device as claimed in claim 17 or claim 18, **characterised in that** the passage (18) is defined in part in a tubular formation (16) of the device (10).

20. A device as claimed in claim 19, **characterised in that** the tubular formation (16) is so shaped to receive restraining means (38) to restrain undesired inflation of the inflatable member (I) as it exits the device (10).

21. A device as claimed in claim 20, **characterised in that** the tubular formation (16) is shaped to receive restraining means (38) in the form of a sleeve, coil, tube or other conventional non-dilating arrangement.

22. A device as claimed in claim 21, **characterised in that** the tubular formation (16) is shaped to receive restraining means (38) thereover.

23. A device as claimed in any of claims 19 to 22, **characterised in that** the tubular formation (16) tapers along at least a portion of its length in a direction generally towards the free end thereof.

24. A device as claimed in any preceding claim, **characterised in that** the device (10) comprises a base plate (14) attachable to a body (B) for location of the device (10).

25. A device as claimed in claim 24, **characterised in that** a rear surface of the base plate (14) comprises said surface (20).

26. A device as claimed in claim 24 or claim 25, **characterised in that** the opening (18) extends through the base plate (14).

27. A device as claimed in any of claims 24 to 26, **characterised in that** the tubular formation (16) extends from one side of said base plate (14).

28. A device as claimed in claim 27, **characterised in that** the tubular formation (16) extends from one side of said base plate (14) to be generally perpendicular thereto.

29. A device as claimed in any preceding claim, **characterised in that** the device (10) comprises means to enable attachment thereof to a body.

30. A device as claimed in claim 29, **characterised in that** the means comprises one or more apertures (34) or formations to receive fixing means (36), such as threaded fasteners, screws, bolts or the like.

31. A device as claimed in claim 29 or claim 30, **characterised in that** the device (10) is releasably attachable to a body (B).

32. A device as claimed in claim 30 or claim 31, **characterised in that** means is provided on a body to receive said fixing means.

33. A device as claimed in any of claims 29 to 32, **characterised in that** the means to enable attachment are positioned so that they do not obstruct or otherwise adversely affect the ability of a seal to be made over or beneath the device (10) to form vacuum conditions.

34. A device as claimed in any preceding claim, **characterised in that** the device (10) is for sealing around a pressurisable seal (I) located for use between a plurality of mating surfaces of a collapsible mould tool.

35. A method of sealing around an inflatable member (I) at the location (E) of exit of the inflatable member (I) from a body (B), the method comprising forming a seal around and restraining inflation of the inflatable member (I) at said location (E).

36. A method as claimed in claim 35, **characterised in that** the method comprises locating the inflatable member (I), generally at said location (E), within a device (10).

37. A method as claimed in claim 36, **characterised in that** the member (I) is located to be a snug or reasonably tight fit when in a non-inflated condition within the device (10) so that the device (10) acts to restrain the inflatable member (I) against inflation therein.

38. A method as claimed in claim 37, **characterised in that** the member (I) is located within a passage (18) in the device (10).

39. A method as claimed in any of claims 35 to 38, **characterised in that** a seal is formed between the body (B), device (10) and inflatable member (I) when the member (I) is inflated with the device (10) in position therearound on the body (B).

40. A method as claimed in any of claims 35 to 39, **characterised in that** the method comprises restraining the inflatable member (I) against inflation at and from the location (E) of exit of the inflatable member (I) from a body (B) to a position remote from said location.

41. A method as claimed in any of claims 38 to 40, **characterised in that** the inflatable member (I) is located along an elongate passage (18) in the device (10).

42. A method as claimed in claim 41, **characterised in that** the passage (18) is located at least in part in a tubular formation (16) of a device (10) as defined in any of claims 19 to 34.

43. A method as claimed in any of claims 36 to 42, **characterised in that** the method comprises providing seal means (25) around the inflatable member (I) generally where the inflatable member (I) enters the device (10) generally at the said location (E) of exit.

44. A method as claimed in claim 43, **characterised in that** the seal means (25) is applied prior to location of the device (10) for use.

45. A method as claimed in claim 43 or claim 44, **characterised in that** the seal means (25) is applied during location of the device (10) for use.

46. A method as claimed in any of claims 43 to 45, **characterised in that** the seal means (25) is provided in the form of a deformable seal compound or body.

47. A method as claimed in any of claims 43 to 46, **characterised in that** the seal means (25) comprises sealant tape.

48. A method as claimed in any of claims 43 to 47, **characterised in that** the seal means (25) is selectively removable following use.

49. A method as claimed in any of claims 43 to 48, **characterised in that** the seal means (25) is located, at least in part, within a recess (24).

50. A method as claimed in any of claims 36 to 49, **characterised in that** the method comprises providing further seal means between the device (10) and the body (B) against which it seals.

51. A method as claimed in claim 50, **characterised in that** one or more recesses (28) is provided to facilitate the formation of such further seals.

52. A method as claimed in any of claims 36 to 51, **characterised in that** the device (10) is secured in position over the inflatable member (I) for use.

53. A method as claimed in claim 52, **characterised in that** the device (10) is secured to the body (B).

54. A method as claimed in claim 53, **characterised in that** the device (10) is secured using securing means (36) such as threaded fasteners, to releasably secure the device.

55. A method as claimed in any of claims 36 to 54, **characterised in that** the method involves the use of a device (10) substantially as defined in any of claims 1 to 34.

56. A body, such as a collapsible mould tool or a part thereof, having one or more devices (10) as defined in any of claims 1 to 34.
